# EUROPEAN PATENT APPLICATION

(11) **EP 4 033 580 A1**
(43) Date of publication of application: **27.07.2022**
(21) Application number: 20878192.2
(22) Date of filing: 20.10.2020
(51) Int. Cl.: H01M 10/0565

(54) **GEL POLYMER ELECTROLYTE WITH CORE-SHELL STRUCTURE, PREPARATION METHOD THEREFOR, AND APPLICATION THEREOF**

(30) Priority: 23.10.2019 CN 201911013965
(71) Applicant: Beijing Weilion New Energy Technology Co., Ltd., Beijing 102402 (CN)
(72) Inventor: MA, Haiyun, Beijing 102402 (CN); XU, Hangyu, Beijing 102402 (CN); LI, Qun, Beijing 102402 (CN); GAO, Peng, Beijing 102402 (CN); HUANG, Jie, Beijing 102402 (CN); LIU, Dongdong, Beijing 102402 (CN)
(74) Representative: Ström & Gulliksson AB
(86) International application number: PCT/CN2020/122027
(87) International publication number: WO 2021/078107

(57) **Abstract**

A gel polymer electrolyte with a core-shell structure, a preparation method therefor, and an application thereof, relating to the technical field of lithium metal batteries or lithium-ion batteries. The gel polymer electrolyte with a core-shell structure is an electrolyte composed of a core layer structure (1) and a shell layer structure (2), wherein the core layer structure (1) is an electrolyte layer with a high liquid electrolyte absorption rate and the shell layer structure (2) is an electrolyte layer with a low liquid electrolyte absorption rate. The gel polymer electrolyte with a core-shell structure can mitigate the rate of release of the core layer electrolyte in the liquid electrolyte, solve the problem of the poor wettability of the liquid injection interface in the late life of the battery; the preparation method is simple and conducive to industrial production.

## Description

### FIELD

The present disclosure relates to a gel polymer electrolyte with a core-shell structure, a preparation method therefor, and an application thereof, it pertains to the technical field of lithium metal batteries or lithium-ion batteries.

### BACKGROUND

Lithium metal batteries or lithium-ion batteries have the widespread application prospect in the technical field of new energy electric vehicles due to their advantages of high energy density, long cycle life, low self-discharge rate and lacking a memory effect. The continuous progresses in the science and technology have imposed increasingly higher requirements on the properties of lithium metal batteries or lithium-ion batteries, and the safety issues become more prominent along with the gradually increased energy density of batteries.

The conventional liquid lithium metal batteries or lithium-ion batteries have unsafe factors, such as the liquid electrolyte is prone to leak. In contrast, the Gel Polymer Electrolytes (GPEs) have high ionic conductivity as the liquid electrolyte, the polymer matrix in GPEs acts as a backbone support by forming a cross-linked structure with the chemical bond or physical action force, so as to fasten the dynamically flowing solvent molecules on the polymer gel backbone, reducing the liquid leakage risk of batteries, thereby improving safety of the batteries.

The gel polymer electrolytes are vital for solving the safety problems of the liquid state lithium metal batteries or lithium-ion batteries. However, the viscosity of gel polymer electrolytes is high, thus how to prepare the gel polymer type batteries on a large scale becomes an industrial challenge. The commonly used preparation methods at present comprise: (1) in situ polymerization, but the battery performance is restrained by the disadvantages such as the uncontrollable molecular weight of polymer, the possibility of residual monomer; (2) coating the separator surface with a glue, the process has the advantages such as no residual monomer and controllable molecular weight, but the added amount of the polymer is low, the battery performance is not significantly improved, and most of the electrolytes are still in a liquid state; (3) direct addition of the polymer during the slurry mixing process, the process has the advantages such as no residual monomer and controllable molecular weight, but there is a problem of the poor wettability of the liquid injection interface in the late life of the battery.

In regard to the third type of gel polymer electrolyte battery mentioned above, since the electrolyte has a strong electrolyte absorption capacity, the battery cell is not desirably wetted after an injection of an gel polymer electrolyte, the viscosity of the gel polymer electrolyte is large, such that the wettability of the battery is poor, and consequently, the internal resistance of the battery is relatively large, the capacity cannot be exerted, the cycle performance and rate capability are poor, and the lithium precipitation is severe. When an electrolyte layer with a high liquid electrolyte absorption rate is coated with an electrolyte layer with a low liquid electrolyte absorption rate, so as to prepare a gel polymer electrolyte with a core-shell structure, wherein the core layer structure is an electrolyte layer with a high liquid electrolyte absorption rate, it has a high dissolution rate in the liquid electrolyte; the shell layer structure is an electrolyte layer with a low liquid electrolyte absorption rate, it has a low dissolution rate in the electrolyte, so as to mitigate the rate of release of the core layer electrolyte in the liquid electrolyte, the pole piece can be sufficiently wetted, such that the electrical performance and safety of the battery can be improved. Further, a use of the core-shell structure for alleviating the release rate of the gel polymer electrolyte with a high liquid electrolyte absorption rate in the liquid electrolyte has not been reported in the literatures and documents.

### SUMMARY

The present disclosure serves to overcome the aforesaid disadvantages in the prior art and provide a gel polymer electrolyte with a core-shell structure, a preparation method therefor, and an application thereof, wherein the gel polymer electrolyte with a core-shell structure can mitigate the rate of release of the core layer electrolyte in the liquid electrolyte, solve the problem of the poor wettability of the liquid injection interface in the late life of the battery.

In order to fulfill the above purpose, the present disclosure adopts a technical solution as follows: a gel polymer electrolyte with a core-shell structure, wherein the gel polymer electrolyte is a core-shell structure composed of a core layer structure and a shell layer structure, the core layer structure is an electrolyte layer with a high liquid electrolyte absorption rate, and the shell layer structure is an electrolyte layer with a low liquid electrolyte absorption rate.

As a preferred embodiment of the gel polymer electrolyte according to the present disclosure, the electrolyte layer with a high liquid electrolyte absorption rate has an electrolyte absorption rate larger than 1.2, the electrolyte layer with a low liquid electrolyte absorption rate has an electrolyte absorption rate less than 1.

The computational formula of the electrolyte absorption rate of the present disclosure is as follows: N=(W-W₀)W₀, where W denotes the mass of the polymer film after absorbing the liquid electrolyte, W₀ denotes the mass of the polymer film before absorbing the liquid electrolyte. The electrolyte absorption rate of the present disclosure is measured with a method as follows: dissolving a polymer electrolyte material in an organic solvent, a mass ratio of the polymer electrolyte material to the organic solvent is 1: (5-50), uniformly stirring the polymer electrolyte material in the organic solvent at a certain temperature to form a mixture, completely dissolving the polymer electrolyte material to form a solution having a viscosity within a range of 30psi-300psi. The polymer film is formed by means of an impregnation method, a coating method, a blade coating process, a spin coating method, an electrostatic spray deposition, a spray coating method, an electrostatic spinning method, a printing method and the like, the polymer film is cut into a standard size, the masses before and after soaking the polymer film in a liquid electrolyte are recorded, and the electrolyte absorption rate of the polymer electrolyte material is calculated according to the formula N= (W- W₀)/W₀.

As a preferred embodiment of the gel polymer electrolyte according to the present disclosure, the electrolyte layer with a high liquid electrolyte absorption rate is at least one selected from the group consisting of a polyacrylate-based electrolyte, a polyether-based electrolyte, a polycarbonate-based electrolyte, a polycarboxylate-based electrolyte, a silicon-based electrolyte, a polythiol-based electrolyte, poly(maleic anhydride)-based electrolyte, a polysulfate-based electrolyte, or a copolymer of two or more the polymer monomers.

As a preferred embodiment of the gel polymer electrolyte of the present disclosure, the polyacrylate-based electrolyte is at least one selected from the group consisting of poly(methyl methacrylate), poly (ethyl methacrylate), polyacrylate, poly(ethyleneglycol) acrylate, poly(trifluoroethyl methacrylate), poly[methyl 2-(trifluoromethyl)acrylate] and poly(methyl trifluoroacrylate); the polyether-based electrolyte is at least one of poly(ethylene oxide) and poly(propylene oxide); the polycarbonate-based electrolyte is at least one selected from the group consisting of poly(trimethylene carbonate), poly(ethylene carbonate), poly(propylene carbonate), poly(vinylene carbonate), poly(dimethyl carbonate), poly(diethyl carbonate) and poly(ethyl methyl polycarbonate); the polycarboxylate-based electrolyte is at least one of poly(vinyl acetate) and polycaprolactone; the silicon-based electrolyte is at least one selected from the group consisting of polysiloxane, polysilsesquioxane and silane-based polysiloxane-based electrolyte; the polysulfate-based electrolyte is at least one selected from the group consisting of poly(1,3,2-dioxathiepane 2,2-dioxide), poly(butylene sulfite), poly(propylene sulfate), poly(dimethyl sulfite), poly(vinyl sulfate), poly(vinyl sulfite); the maleic anhydride-based electrolyte is at least one of poly(methyl methacrylate-co-maleic anhydride) and poly(vinylidene fluoride-maleic anhydride).

As a preferred embodiment of the gel polymer electrolyte according to the present disclosure, the silicon-based electrolyte is at least one selected from the group consisting of dimethylsiloxane-intercalation-ethylene oxide (DMS-nEO, n =2, 3, 4, 5, 6.4, 8.7, 13.3), polymethylsiloxane ester (PMMS), polyoxyethylene methacrylate-g-polydimethylsiloxane (POEM-g-PDMS), polyoxyethylene etherified methylsiloxane (PAGS), bipyrimidated polysiloxane-based polymer (PS-PBOEM-n (n=1∼7)), trimethoxysilylpropyl polysilane polymer (PSP), cyclic carbonate-hydropolysiloxane (C-PHMS), vinylene carbonate-hydropolysiloxane (VC-PHMS), bis-trifluoromethane sulfonamide-polysiloxane (PS-TFSI), perfluoroalkyl polysiloxane polymer (PS-PTAS), tetrafluorophenyl boronic acid-polysiloxane (FSP-5), polyhedral oligomeric silsesquioxane-polyoxyethylene (POSS-PEO), linear polysilsesquioxane-based polymer (LCP), branched polysilsesquioxane-based polymer (BCP), methacrylic acid-polyhedral oligomeric silsesquioxane (MA-POSS).

As a preferred embodiment of the gel polymer electrolyte of the present disclosure, the electrolyte layer with a low liquid electrolyte absorption rate is at least one electrolyte selected from the group consisting of poly(acrylic acid), styrene-butadiene rubber, chitosan, sodium alginate, polyimide, poly(vinylidene fluoride), polyacrylonitrile, poly(vinylidene fluoride-co-hexafluoropropylene), or a polymer produced by polymerization of at least one selected from the group consisting of ethylene phosphate, acrylate-based monomer, silane coupling agent, titanate coupling agent and aluminate coupling agent.

As a preferred embodiment of the gel polymer electrolyte according to the present disclosure, the acrylate-based monomer is at least one selected from the group consisting of 2-hydroxyethyl methacrylate, 2-hydroxyethyl acrylate, 2-hydroxypropyl methacrylate, 2,2,2-trifluoroethyl methacrylate, and glycidyl methacrylate; the silane coupling agent is at least one selected from the group consisting of [3-(methacryloxy)propyl]trimethoxysilane, [3-(methacryloyloxy)propyl]triisopropoxysilane, [3-(methacryloxy)propyl]methyldimethoxysilane, vinyltriethoxysilane, vinyltrimethoxysilane, and vinyl tris-(2-methoxyethoxy)silane; the titanate coupling agent is at least one selected from the group consisting of di(acetylacetonyl)diisopropyl titanate, isopropyl tri(dioctylphosphate) titanate and isopropyl trioleyl titanate; the aluminate coupling agent is distearoyl isopropoxy aluminate.

As a preferred embodiment of the gel polymer electrolyte according to the present disclosure, the core layer structure has a diameter of 50nm to 10µm, and the shell layer structure has a thickness of 2-2,000nm.

As a preferred embodiment of the gel polymer electrolyte according to the present disclosure, the gel polymer electrolyte further comprises a transition layer between the core layer structure and the shell layer structure, the transition layer has a thickness of 10nm to 5µm. The transition layer is a polymer obtained by polymerizing the electrolyte of the core layer structure with the electrolyte of the shell layer structure.

The gel polymer electrolyte of the present disclosure will be dissolved upon contacting with a liquid electrolyte, the core layer electrolyte absorbs the liquid electrolyte quickly and the shell layer electrolyte absorbs the liquid electrolyte slowly. After dissolution, the core layer electrolyte is gradually released, while the shell layer electrolyte dissolves slowly or only swells, so that the shell layer electrolyte will maintain its original state or merely has a swelling structure of its original state.

A method of preparing the gel polymer electrolyte with a core-shell structure according to the present disclosure comprising the following steps:

(1) mixing an electrolyte of the core layer structure, water, a surfactant, a chelating agent, a pH adjusting agent, monomer ingredients of the shell layer structure, subjecting the mixture to an ultrasonic stirring and dispersion to form an uniformly mixed dispersion emulsion;

(2) adding an initiator to the dispersion emulsion obtained in step (1), reacting at 30-100°C for 20-60min to form a colloid emulsion, forming a layer of electrolyte with a low liquid electrolyte absorption rate on the surface of the electrolyte particles with a high liquid electrolyte absorption rate, centrifuging and separating the colloid emulsion and drying a solid product under a vacuum environment, thereby preparing the gel polymer electrolyte with a core-shell structure.

As a preferred embodiment of the method for preparing the gel polymer electrolyte according to the present disclosure, in the step (1), the surfactant is at least one selected from the group consisting of alkyl benzene sulfonate, alkyl sulfonate, alkyl sulfate, alkyl sulfated ester, alkyl polyoxyethylene ether sulfate and glyceryl stearate; the chelating agent is at least one selected from the group consisting of ethylenediaminetetraacetic acid, sodium pyrophosphate and trisodium phosphate, and the pH adjusting agent is at least one selected from the group consisting of bicarbonate, ammonia water, dimethyl ethylenediamine and triethylamine.

As a preferred embodiment of the method for preparing the gel polymer electrolyte of the present disclosure, the initiator in step (2) is at least one selected from the group consisting of sodium persulfate, ammonium persulfate and potassium persulfate.

As a preferred embodiment of the method for preparing the gel polymer electrolyte of the present disclosure, a mass ratio of the electrolyte of the core layer structure to the monomer ingredients of the shell layer structure is (2-10):1, a mass ratio of the monomer ingredients of the shell layer structure to water is 1: (20-60), a mass ratio of the monomer ingredients of the shell layer structure to the surfactant is 1: (0.02-0.08); a mass ratio of the monomer ingredients of the shell layer structure to the initiator is 1: (0.005-0.03), a mass ratio of the monomer ingredients of the shell layer structure to the chelating agent is 1: (0.001-0.02), and a mass ratio of the monomer ingredients of the shell layer structure to the pH adjusting agent is 1: (0.005-0.02).

In a second aspect, the present disclosure further provides a use of the aforesaid gel polymer electrolyte with a core-shell structure in the lithium metal batteries or lithium-ion batteries.

In a third aspect, the present disclosure also provides a lithium battery which is a lithium metal battery or a lithium-ion battery, at least one of the cathode, the anode, the liquid electrolyte and the separator of the lithium metal battery or the lithium-ion battery comprises the aforesaid gel polymer electrolyte with a core-shell structure.

Compared with the prior art, the present disclosure produces the following favorable effects: the gel polymer of the present disclosure has a core-shell structure, wherein the core layer structure is an electrolyte layer with a high liquid electrolyte absorption rate, and the shell layer structure is an electrolyte layer with a low liquid electrolyte absorption rate, the gel polymer electrolyte can mitigate the rate of release of the core layer electrolyte in the liquid electrolyte, the pole piece can be sufficiently wetted, such that the electrical performance and safety of the battery can be improved; in addition, the preparation method is simple and conducive to industrial production.

### BRIEF DESCRITION OF THE DRAWINGS

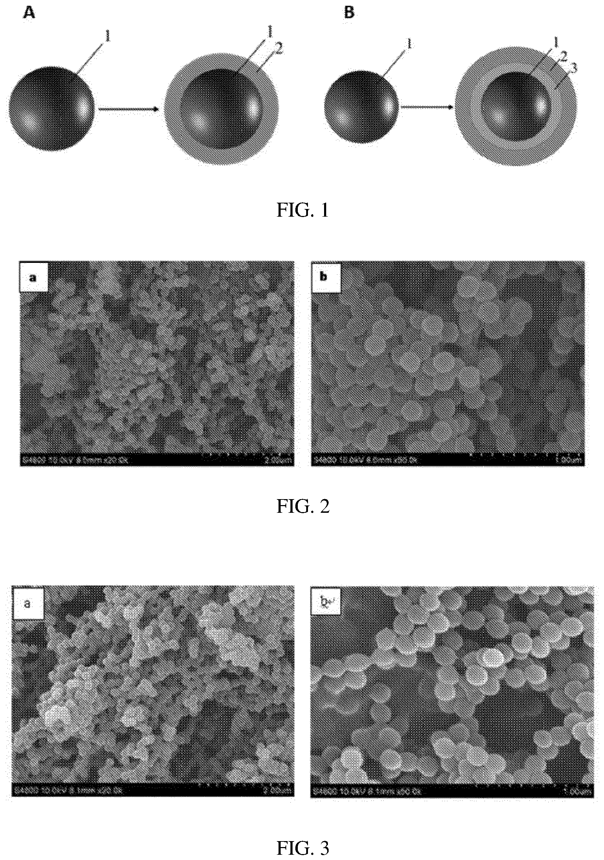

Figure 1 is a schematic diagram illustrating a structure of the gel polymer electrolyte with a core-shell structure according to the present disclosure. In FIG. 1, diagram A is a schematic diagram illustrating a structure of the gel polymer electrolyte which does not contain a transition layer, diagram B is a schematic diagram illustrating a structure of the gel polymer electrolyte which contains a transition layer. In FIG. 1, reference sign 1 denotes a core layer structure, i.e., a polymer electrolyte with a high liquid electrolyte absorption rate; reference sign 2 denotes a shell layer structure, i.e., a polymer electrolyte with a low liquid electrolyte absorption rate; reference sign 3 denotes a transition layer, i.e., a polymer produced through polymerization of the electrolyte with a core layer structure and the electrolyte with a shell layer structure.
Figure 2 shows Scanning Electron Microscope (SEM) photographs of the gel polymer electrolyte E1 with a core-shell structure (wherein the photograph (a) illustrates a magnification of 20K, the photograph (b) illustrates a magnification of 50K).
Figure 3 shows Scanning Electron Microscope (SEM) photographs of the gel polymer electrolyte E1-1 which has a high liquid electrolyte absorption rate and does not contain a core-shell structure (wherein the photograph (a) illustrates a magnification of 20K, the photograph (b) illustrates a magnification of 50K).
Figure 4 is a graph showing the test results of wettability of the lithium-ion gel electrolyte batteries of Comparative Example 1 and Example 1 according to the present disclosure.

### DETAILED DESCRPITION

In order to explain the purpose, technical solution and advantages of the present disclosure in a favorable manner, the present disclosure will be further described below with reference to appended figures and specific examples.

The present disclosure provides a gel polymer electrolyte with a core-shell structure used for the lithium metal batteries or lithium-ion batteries having a core-shell structure, as shown in FIG. 1A, wherein the core layer structure is an electrolyte layer with a high liquid electrolyte absorption rate, the shell layer structure is an electrolyte layer with a low liquid electrolyte absorption rate; a transition layer is optionally provided between the core layer structure and the shell layer structure, the transition layer has a thickness of 10nm to 5µm; the transition layer is a polymer obtained by polymerizing the electrolyte of the core layer structure and the electrolyte of the shell layer structure; during a process of emulsion polymerization, the core shell may contain unreacted monomer, and during the coating process, the unreacted monomer of the core layer may initially react with the shell layer monomer to form a transition layer obtained by polymerizing the electrolyte of the core layer structure and the electrolyte of the shell layer structure, as shown in FIG. IB.

The gel battery in the examples of the present disclosure is produced from the gel polymer electrolyte of the present disclosure through the preparation method thereof. The liquid electrolyte used as an injected liquid of the gel battery prepared in the Examples of the present disclosure is commercially available standard liquid electrolyte.

### Examples 1-20

### (1) Preparation of an electrolyte with a high liquid electrolyte absorption rate of the core layer structure

The electrolyte with a high liquid electrolyte absorption rate of the core layer structure can be directly purchased from a finished product, or can be voluntarily synthesized. The specific synthesis steps are as follows: the monomer of the electrolyte with a high liquid electrolyte absorption rate of the core layer structure was subjected to a reduced pressure distillation to obtain a pure fresh monomer; the fresh monomer was mixed with water, a surfactant, an initiator, a chelating agent and a pH adjusting agent to carry out a reaction to obtain a colloidal emulsion, the colloidal emulsion was subjected to centrifuging and separating; a solid product was subjected to drying under a vacuum environment, such that the electrolyte microspheres with a high liquid electrolyte absorption rate were produced.

### (2) Preparation of a gel polymer electrolyte with core-shell structure

The electrolyte with a high liquid electrolyte absorption rate of the core layer structure was mixed with water, a surfactant, a chelating agent, a pH adjusting agent, and monomer ingredients of the core layer structure, the matching ratios of the components were shown in Table 1, the components were subjected to an ultrasonic stirring and dispersion for 20-50min until an uniformly mixed dispersion emulsion is formed; the dispersion emulsion was subjected to water bath and pre-emulsification at 50-60°C for 20-50min; an initiator was further added to carry out reaction at 70-80°C for 20-60min to form a gel emulsion, the gel emulsion was subjected to centrifugation and separation, the obtained solid product was dried under a vacuum environment, such that a gel polymer electrolyte with a core-shell structure was prepared, its parameters were shown in Table 2; in addition, the gel electrolyte without a core-shell structure was prepared as a comparison, Table 3 illustrated the parameters of the gel electrolyte without a core-shell structure. The surfactant used in the Examples was sodium dodecylbenzenesulfonate, the initiator was sodium persulfate or potassium persulfate, the chelating agent was ethylenediaminetetraacetic acid, and the pH adjusting agent was sodium bicarbonate.

FIG. 2 and FIG. 3 illustrated the Scanning Electron Microscope (SEM) photographs of the gel polymer electrolyte E1 with a core-shell structure and the gel polymer electrolyte E1-1 with a high liquid electrolyte absorption rate obtained through the aforementioned operations; wherein the photograph (a) illustrates a magnification of 20K, the photograph (b) illustrates a magnification of 50K. It was confirmed by the SEM observation that the gel polymer electrolyte E1-1 with a high liquid electrolyte absorption rate had a spherical structure with an average particle diameter of 180nm, as shown in FIG. 3, and the coating of the electrolyte with a high liquid electrolyte absorption rate with a layer of an electrolyte E1 having a low liquid electrolyte absorption rate did not alter its morphology state, the gel polymer electrolyte E1 also exhibited a spherical structure with an average particle diameter of 200nm, as shown in FIG. 2.

**Table 1**

| | Electrolyte with a core layer structure | Water | Surfactant | Chelating agent | pH adjusting agent | Initiator | Monomer with a shell layer structure |
|---|---|---|---|---|---|---|---|
| E1 | 4 | 40 | 0.03 | 0.008 | 0.008 | 0.01 | 1 |
| E2 | 8 | 40 | 0.03 | 0.008 | 0.01 | 0.012 | 1 |
| E3 | 4 | 40 | 0.04 | 0.008 | 0.01 | 0.01 | 1 |
| E4 | 5 | 40 | 0.04 | 0.008 | 0.02 | 0.01 | 1 |
| E5 | 6 | 40 | 0.04 | 0.008 | 0.01 | 0.018 | 1 |
| E6 | 6 | 40 | 0.02 | 0.008 | 0.02 | 0.02 | 1 |
| E7 | 5 | 40 | 0.02 | 0.008 | 0.01 | 0.01 | 1 |
| E8 | 7 | 40 | 0.02 | 0.008 | 0.02 | 0.01 | 1 |
| E9 | 6 | 40 | 0.02 | 0.008 | 0.02 | 0.01 | 1 |
| E10 | 5 | 40 | 0.02 | 0.008 | 0.01 | 0.01 | 1 |

**Table 2**

| Electrolyte | Core layer/N | Shell layer/N | Diameter of core layer/nm | Thickness of shell layer/nm |
|---|---|---|---|---|
| E1 | poly(methylmethacrylate) | 3-methacryloxy propyl trimethoxyl | 180 | 10 |
| E2 | poly(methylmethacrylate) | polyacrylic acid | 300 | 60 |
| E3 | polycaprolactone | styrene-butadiene rubber | 150 | 20 |
| E4 | poly(propylene carbonate) | vinylphosphonic acid | 400 | 50 |
| E5 | polyvinyl acetate | 2-hydroxyethyl methacrylate | 500 | 2 |
| E6 | polyethylene oxide | hydroxyethyl acrylate | 50 | 85 |
| E7 | polyacrylic glycol ester | 3-methacryloxypropyl methyldimethoxysilane | 600 | 300 |
| E8 | poly trimethylene carbonate | titanium diisopropoxide bis(acety lacetonate) | 10,000 | 2,000 |
| E9 | polymethylsiloxane ester | distearoyl isopropoxy aluminate | 5,000 | 90/ transition layer 10 |
| E10 | poly(1,3-propylenesulfate) | sodium alginate | 800 | 80/transition layer 5,000 |

**Table 3**

| Electrolyte | Core layer | Diameter of core layer/nm |
|---|---|---|
| E1-1 | polymethylmethacrylate | 180 |
| E2-1 | polymethylmethacrylate | 300 |
| E3-1 | polycaprolactone | 150 |
| E4-1 | poly(propylene carbonate) | 400 |
| E5-1 | polyvinyl acetate | 500 |
| E6-1 | polyethylene oxide | 50 |
| E7-1 | polyacrylic glycol ester | 600 |
| E8-1 | polytrimethylene carbonate | 10,000 |
| E9-1 | polymethylsiloxane ester | 5,000 |
| E10-1 | poly(1,3-propylenesulfate) | 800 |

### (3) Electrolyte absorption rate tests of the electrolyte of core layer structure and the electrolyte of shell layer structure

The polyelectrolyte material was dissolved in an organic solvent, a mass ratio of the polymer electrolyte material to the organic solvent was 1: (5-50), the polymer electrolyte material and the organic solvent were uniformly stirred at a certain temperature to form a mixture, such that the polymer electrolyte material was completely dissolved to form a solution having a viscosity within a range of 30psi-300psi. The polymer film was formed by means of an impregnation method, a coating method, a blade coating process, a spin coating method, an electrostatic spray deposition, a spray coating method, an electrostatic spinning method, a printing method and the like. The polymer film was cut into a standard size, the mass before soaking the polymer film in a liquid electrolyte was recorded and denoted as W₀, and after soaking the polymer film in the liquid electrolyte for a certain time, the soaked polymer film was placed on a filter paper, after absorbing the liquid electrolyte with the filter paper till the soaked polymer film has a constant weight, the mass of the polymer film after absorbing the liquid electrolyte was recorded and denoted as W, the electrolyte absorption rate of the polymer was calculated according to the formula N=(W-W₀)/W₀, where W denoted the mass of the polymer film after absorbing the liquid electrolyte, and W₀ denoted the mass of the polymer film before absorbing the liquid electrolyte.

In the Examples, the organic solvent was N-methylpyrrolidone. The polymer was subjected to blade coating to form a film.

The electrolyte absorption rates of polymer electrolytes in the core layer and shell layer were shown in Table 4.

**Table 4**

| | Electrolyte of the core layer structure | N | Electrolyte of the shell layer structure | N |
|---|---|---|---|---|
| E1 | poly(methylmethacrylate) | >1.8 | 3-methacryloxy propyl trimethoxyl silane | <0.6 |
| E2 | poly(methylmethacrylate) | >1.8 | polyacrylic acid | <0.5 |
| E3 | polycaprolactone | >1.7 | styrene-butadiene rubber | <0.2 |
| E4 | poly(propylene carbonate) | > 1.7 | vinylphosphonic acid | <0.7 |
| E5 | polyvinyl acetate | > 1.6 | 2-hydroxyethyl methacrylate | <0.9 |
| E6 | polyethylene oxide | > 1.3 | hydroxyethyl acrylate | <0.9 |
| E7 | polyacrylic glycol ester | > 1.6 | 3-methacryloxypropylmethy ldimethoxysilane | <0.5 |
| E8 | polytrimethylene carbonate | > 1.5 | titanium diisopropoxide bis(acety lacetonate) | <0.4 |
| E9 | polymethylsiloxane ester | > 1.2 | distearoyl isopropoxy aluminate | <0.6 |
| E10 | poly(1,3-propylenesulfate) | > 1.4 | sodium alginate | <0.3 |

### Preparation of cathode pole piece

The active substances of the cathode material, a conductive agent, a binder and a polymer electrolyte were added into a solvent N-methyl pyrrolidone according to the data listed in Table 5, the components were mixed and stirred uniformly, the solvent represented 65% of the total slurry, so as to obtain a cathode slurry having a certain fluidity; the cathode slurry was then coated on an aluminum foil with a surface capacity of 4mAh/cm², the aluminum foil was subjected to blast drying, and then subjected to cold pressure treatment by using a roller press, the obtained cathode pole pieces were named C1, C2 ... C12, and C1-1, C2-1 ... C10-1, respectively. Among them, the active material was lithium Nickel Cobalt Aluminate (NCA) or lithium Nickel Cobalt Manganate (NCM), the conductive agent was carbon nanotubes and conductive carbon black (CNT+Super-P), and the binder was polyvinylidene fluoride (PVDF).

**Table 5**

| Numbers | Active substances | Conductive agent | Binder | Electrolyte | Percentage of electrolyte |
|---|---|---|---|---|---|
| C1 | NCA | CNT +Super-P | PVDF | E1 | 2% |
| C1-1 | NCA | CNT +Super-P | PVDF | E1-1 | 2% |
| C2 | NCA | CNT +Super-P | PVDF | E2 | 3% |
| C2-1 | NCA | CNT +Super-P | PVDF | E2-1 | 3% |
| C3 | NCA | CNT +Super-P | PVDF | E3 | 4% |
| C3-1 | NCA | CNT +Super-P | PVDF | E3-1 | 4% |
| C4 | NCM | CNT +Super-P | PVDF | E4 | 5% |
| C4-1 | NCM | CNT +Super-P | PVDF | E4-1 | 5% |
| C5 | NCM | CNT +Super-P | PVDF | E5 | 6% |
| C5-1 | NCM | CNT +Super-P | PVDF | E5-1 | 6% |
| C6 | NCM | CNT +Super-P | PVDF | E6 | 3% |
| C6-1 | NCM | CNT +Super-P | PVDF | E6-1 | 3% |
| C7 | NCM | CNT +Super-P | PVDF | E7 | 3% |
| C7-1 | NCM | CNT +Super-P | PVDF | E7-1 | 3% |
| C8 | NCM | CNT +Super-P | PVDF | E8 | 4% |
| C8-1 | NCM | CNT +Super-P | PVDF | E8-1 | 4% |
| C9 | NCM | CNT +Super-P | PVDF | E9 | 1% |
| C9-1 | NCM | CNT +Super-P | PVDF | E9-1 | 1% |
| C10 | NCM | CNT +Super-P | PVDF | E10 | 4% |
| C10-1 | NCM | CNT +Super-P | PVDF | E10-1 | 4% |
| Cll | NCA | CNT +Super-P | PVDF | None | 0% |
| C12 | NCM | CNT +Super-P | PVDF | None | 0% |

### (5) Preparation of anode pole piece

The active substances of the anode material, a conductive agent, a binder and a polymer electrolyte were added into a solvent deionized water according to the data listed in Table 6, the components were mixed and stirred uniformly, the solvent represented 45% of the total slurry, so as to obtain an anode slurry having a certain fluidity; the anode slurry was then coated on a copper foil with a surface capacity of 4.2mAh/cm², the copper foil was subjected to blast drying, and then subjected to cold pressure treatment by using a roller press, the obtained anode pole pieces were named A1, A2 ... A12, and A1-1, A2-1 ... A10-1, respectively. Among them, the active material was natural graphite, silicon-oxygen-carbon (SOC) or metallic lithium, the conductive agent was carbon nanotube and conductive carbon black (CNT+Super-P), and the binder was sodium carboxymethyl cellulose and styrene-butadiene rubber (CMC+SBR).

**Table 6**

| Numbers | Active substances | Conductive agent | Binder | Electrolyte | Percentage of electrolyte |
|---|---|---|---|---|---|
| A1 | natural graphite | CNT +Super-P | CMC+SBR | E1 | 2% |
| A1-1 | natural graphite | CNT +Super-P | CMC+SBR | E1-1 | 2% |
| A2 | natural graphite | CNT +Super-P | CMC+SBR | E2 | 3% |
| A2-1 | natural graphite | CNT +Super-P | CMC+SBR | E2-1 | 3% |
| A3 | natural graphite | CNT +Super-P | CMC+SBR | E3 | 4% |
| A3-1 | natural graphite | CNT +Super-P | CMC+SBR | E3-1 | 4% |
| A4 | SOC | CNT +Super-P | CMC+SBR | E4 | 5% |
| A4-1 | SOC | CNT +Super-P | CMC+SBR | E4-1 | 5% |
| A5 | SOC | CNT +Super-P | CMC+SBR | E5 | 6% |
| A5-1 | SOC | CNT +Super-P | CMC+SBR | E5-1 | 6% |
| A6 | SOC | CNT +Super-P | CMC+SBR | E6 | 3% |
| A6-1 | SOC | CNT +Super-P | CMC+SBR | E6-1 | 3% |
| A7 | metallic lithium | CNT +Super-P | CMC+SBR | E7 | 3% |
| A7-1 | metallic lithium | CNT +Super-P | CMC+SBR | E7-1 | 3% |
| A8 | SOC | CNT +Super-P | CMC+SBR | E8 | 4% |
| A8-1 | SOC | CNT +Super-P | CMC+SBR | E8-1 | 4% |
| A9 | SOC | CNT +Super-P | CMC+SBR | E9 | 4% |
| A9-1 | SOC | CNT +Super-P | PAALi | E9-1 | 4% |
| A10 | SOC | CNT +Super-P | CMC+SBR | E10 | 4% |
| A10-1 | SOC | CNT +Super-P | CMC+SBR | E10-1 | 4% |
| A11 | SOC | CNT +Super-P | SBR | None | 0% |
| A12 | natural graphite | CNT +Super-P | CMC+SBR | None | 0% |

### (6) Preparation of separators

The electrolyte with a core-shell structure was added into a solvent deionized water and mixed and stirred uniformly, the solvent represented 20% of the total slurry, so as to obtain a slurry having a certain fluidity; the slurry was then coated on the separator of a double-sided ceramic (2+9+2, 2 denoted a thickness of 2 µm of an alumina ceramic, 9 denoted a thickness of 9 µm of a separator substrate) substrate, the thickness of each coating surface of the separator was controlled to be 2µm; the separator was dried to obtain the separator with a coating of the core-shell structure, the parameters of the separators were shown in Table 7. Wherein the substrate was Polyethylene (PE).

**Table 7**

| No. | Substrate | Electrolyte of core-shell structure | Thickness of coating/µm | Specification/thickness/µm | Remarks |
|---|---|---|---|---|---|
| S1 | PE | E1 | 2 | 2+2+9+2+2 | 9-substrate 2-alumina ceramic 2-coating |
| S2 | PE | E2 | 2 | 2+2+9+2+2 | 9-substrate 2-alumina ceramic 2-coating |
| S3 | PE | E4 | 2 | 2+2+9+2+2 | 9-substrate 2-alumina ceramic 2-coating |
| S4 | PE | E5 | 2 | 2+2+9+2+2 | 9-substrate 2-alumina ceramic 2-coating |
| S5 | PE | - | 0 | 4+9+4 | 9-substrate 4-alumina ceramic |

### (7) Preparation of lithium metal batteries or lithium-ion batteries containing a gel polymer electrolyte with a core-shell structure

The electric core was prepared according to Table 8, the dimensions of pole piece were as follows: cathode 107mm×83mm, anode 109mm×85mm, and a 10Ah pouch core was prepared. The cathode pole piece, anode pole piece and separators were subjected to lamination, baking, an injection of a liquid electrolyte and formation processes to obtain the lithium metal batteries or lithium-ion batteries containing a gel polymer electrolyte with a core-shell structure, i.e., Examples 1-20.

**Table 8**

| Examples | Cathode | Anode | Separator |
|---|---|---|---|
| Example 1 | C1 | A1 | S5 |
| Example 2 | C2 | A2 | S5 |
| Example 3 | C3 | A3 | S5 |
| Example 4 | C4 | A4 | S5 |
| Example 5 | C5 | A5 | S5 |
| Example 6 | C6 | A6 | S5 |
| Example 7 | C7 | A7 | S1 |
| Example 8 | C8 | A8 | S2 |
| Example 9 | C9 | A9 | S3 |
| Example 10 | C10 | A10 | S4 |
| Example 11 | C11 | A1 | S5 |
| Example 12 | C11 | A2 | S5 |
| Example 13 | C12 | A3 | S5 |
| Example 14 | C12 | A4 | S5 |
| Example 15 | C1 | A11 | S5 |
| Example 16 | C3 | A11 | S5 |
| Example 17 | C4 | A12 | S5 |
| Example 18 | C5 | A12 | S5 |
| Example 19 | C11 | A11 | S1 |
| Example 20 | C12 | A12 | S2 |

### Comparative Examples 1-20

As shown in Table 9, the cathode pole piece, anode pole piece and separators were subjected to lamination, baking, liquid injection (i.e., an injection of liquid electrolyte) and formation processes to obtain the lithium metal batteries or lithium-ion batteries containing a gel polymer electrolyte without a core-shell structure, i.e., Comparative Examples 1-20.

**Table 9**

| Comparative Examples | Cathode | Anode | Separator |
|---|---|---|---|
| Comparative Example 1 | C1-1 | A1-1 | S5 |
| Comparative Example 2 | C2-1 | A2-1 | S5 |
| Comparative Example 3 | C3-1 | A3-1 | S5 |
| Comparative Example 4 | C4-1 | A4-1 | S5 |
| Comparative Example 5 | C5-1 | A5-1 | S5 |
| Comparative Example 6 | C6-1 | A6-1 | S5 |
| Comparative Example 7 | C7-1 | A7-1 | S5 |
| Comparative Example 8 | C8-1 | A8-1 | S5 |
| Comparative Example 9 | C9-1 | A9-1 | S5 |
| Comparative Example 10 | C10-1 | A10-1 | S5 |
| Comparative Example 11 | C11 | A1-1 | S5 |
| Comparative Example 12 | C11 | A2-1 | S5 |
| Comparative Example 13 | C12 | A3-1 | S5 |
| Comparative Example 14 | C12 | A4-1 | S5 |
| Comparative Example 15 | C1-1 | A11 | S5 |
| Comparative Example 16 | C3-1 | A11 | S5 |
| Comparative Example 17 | C4-1 | A12 | S5 |
| Comparative Example 18 | C5-1 | A12 | S5 |
| Comparative Example 19 | C11 | A11 | S5 |
| Comparative Example 20 | C12 | A12 | S5 |

### Effect Example 1

### (1) Wetting condition of pole piece

The lithium ion gel polymer electrolyte batteries prepared in Comparative Example 1 and Example 1 were subjected to a wettability test, the dry electric cores prepared in Comparative Example 1 and Example 1 were subjected to an injection of a liquid electrolyte, vacuumizing and packing, and then standing still for 8h, the batteries were disassembled for observing the wetting condition of the pole piece.

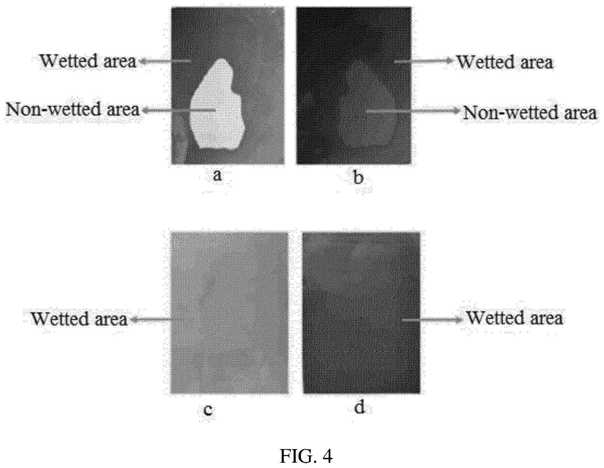

The test results were shown in FIG. 4, among them, FIG. 4(a) illustrated the cathode pole piece in the Comparative Example 1, wherein the white region denoted the non-wetting region of the pole piece, and the remaining portion denoted the wetting region of the pole piece; FIG. 4(b) illustrated the anode pole piece in the Comparative Example 1, wherein the white region denoted the non-wetting region of the pole piece, and the remaining portion denoted the wetting region of the pole piece; FIG. 4(c) illustrated the cathode pole piece in the Example 1, FIG. 4(d) illustrated the anode pole piece in the Example 1; as can be seen from FIG. 4, a lithium metal battery or a lithium-ion battery prepared without a use of the gel polymer electrolyte with a core-shell structure of the present disclosure was discovered after disassembly that a large area of the cathode pole piece and the anode pole piece near the middle part was not wetted, while a lithium metal battery or a lithium-ion battery prepared through a use of the gel polymer electrolyte with a core-shell structure of the present disclosure was discovered after disassembly that all the cathode pole piece and the anode pole piece were completely wetted, it demonstrated that the gel polymer electrolyte with a core-shell structure of the present disclosure can greatly improve the wettability of the batteries.

### (2) Battery performance testing

The resistance, first cycle efficiency, and capacity retention ratio after 50 charge-discharge cycles were respectively tested for the lithium metal batteries or lithium-ion batteries prepared in Examples 1-20 and Comparative Examples 1-20, the results were shown in Table 10. The test voltage range: 2.75-4.2V, and the charge-discharge current: 0.5C/0.5C.

**Table 10**

| | Resistance/mΩ | First cycle efficiency/% | Capacity retention ratio after 50 charge-discharge cycles/% |
|---|---|---|---|
| Example 1 | 2.84 | 87.9 | 98.7 |
| Example 2 | 2.95 | 87.6 | 98.9 |
| Example 3 | 3.22 | 87.5 | 98.6 |
| Example 4 | 3.75 | 83.5 | 96.8 |
| Example 5 | 4.03 | 83.9 | 96.7 |
| Example 6 | 2.99 | 83.6 | 96.8 |
| Example 7 | 2.89 | 90.8 | 96.6 |
| Example 8 | 3.18 | 83.9 | 95.9 |
| Example 9 | 2.79 | 83.7 | 96.0 |
| Example 10 | 3.09 | 83.2 | 95.8 |
| Example 11 | 2.79 | 87.5 | 96.1 |
| Example 12 | 2.76 | 88.3 | 96.3 |
| Example 13 | 2.87 | 88.1 | 96.8 |
| Example 14 | 2.96 | 83.5 | 96.2 |
| Example 15 | 2.81 | 83.4 | 96.5 |
| Example 16 | 3.11 | 84.1 | 96.7 |
| Example 17 | 3.56 | 88.1 | 98.6 |
| Example 18 | 3.91 | 87.1 | 98.7 |
| Example 19 | 2.99 | 83.9 | 96.5 |
| Example 20 | 2.96 | 87.9 | 99.1 |
| Comparative Example 1 | 5.68 | 70.2 | 80.2 |
| Comparative Example 2 | 6.05 | 70.8 | 80.9 |
| Comparative Example 3 | 6.76 | 71.2 | 79.8 |
| Comparative Example 4 | 7.69 | 67.8 | 87.0 |
| Comparative Example 5 | 8.46 | 67.8 | 79.7 |
| Comparative Example 6 | 6.13 | 68.2 | 79.5 |
| Comparative Example 7 | 6.36 | 72.8 | 78.5 |
| Comparative Example 8 | 6.52 | 67.6 | 80.2 |
| Comparative Example 9 | 5.86 | 67.8 | 82.1 |
| Comparative Example 10 | 6.33 | 69.4 | 83.1 |
| Comparative Example 11 | 5.30 | 69.8 | 80.8 |
| Comparative Example 12 | 5.66 | 69.8 | 79.9 |
| Comparative Example 13 | 5.74 | 69.1 | 78.5 |
| Comparative Example 14 | 6.07 | 65.8 | 79.8 |
| Comparative Example 15 | 5.62 | 68.3 | 79.8 |
| Comparative Example 16 | 6.38 | 68.9 | 78.9 |
| Comparative Example 17 | 7.12 | 69.6 | 79.4 |
| Comparative Example 18 | 8.02 | 70.5 | 79.8 |
| Comparative Example 19 | 2.87 | 83.8 | 95.2 |
| Comparative Example 20 | 2.98 | 87.8 | 95.4 |

As shown in Table 10, Comparative Examples 1-18 involve with the gel polymer electrolyte batteries which do not contain a core-shell structure, the batteries have a large internal resistance of 5.30-8.46mΩ, a low first cycle efficiency of only 65.8%-71.2%, a poor battery cyclability, and a maximum capacity retention ratio after 50 charge-discharge cycles is only 87.0%; the key reason is that the added polymer electrolyte has a strong liquid electrolyte absorption capacity, the polymer electrolyte dissolves too quickly after the liquid injection (i.e., an injection of a liquid electrolyte), the viscosity of the liquid electrolyte is large, such that the wettability of the battery is poor, and consequently, the internal resistance of the battery is relatively large, the capacity cannot be exerted, the cycle performance and rate capability are poor, and the lithium precipitation is severe. In contrast, during a use of the lithium metal batteries or lithium-ion batteries prepared with the gel polymer electrolyte with a core-shell structure of the present disclosure, since the polymer electrolyte with a core-shell structure has a slow dissolution rate in the liquid electrolyte, it can mitigate the rate of release of the core layer electrolyte with a high liquid electrolyte absorption rate in the liquid electrolyte, such that the battery has a desirable wettability, an internal resistance of the battery can be significantly reduced to 2.76-4.03mΩ, and the First cycle efficiency is normal, and the capacity retention ratio after 50 charge-discharge cycles is 95.8% or more; when compared with Comparative Examples 19-20, the internal resistance of the battery is not significantly increased and the cyclability is slightly improved. It demonstrates that the gel polymer electrolyte synthesized in the present disclosure has little influence on the battery performance, and the battery capacity is not reduced, and the improved cyclability mainly derives from the liquid retention property of the gel electrolyte. Therefore, the gel polymer electrolyte with a core-shell structure of the present disclosure can mitigate the rate of release of the core polymer electrolyte in the liquid electrolyte, such that the pole pieces can be sufficiently wetted, the electrical performance and safety of the battery are improved, in addition, the battery cyclability is enhanced due to the liquid retention property of the polymer electrolyte.

Finally, it should be noted that the above examples merely serve to illustrate the technical solution of the present disclosure, instead of imposing limitation to the protection scope of the present disclosure; although the present disclosure has been described in detail with reference to preferred embodiments thereof, it shall be comprehended by those of ordinary skill in the art that modifications and equivalent replacements may be implemented in regard to the technical solution of the present disclosure without deviating from the essence and scope of the technical solution of the present disclosure.

## Claims

1. A gel polymer electrolyte with a core-shell structure, wherein the gel polymer electrolyte is an electrolyte composed of a core layer structure and a shell layer structure, the core layer structure is an electrolyte layer with a high liquid electrolyte absorption rate, and the shell layer structure is an electrolyte layer with a low liquid electrolyte absorption rate.

2. The gel polymer electrolyte of claim 1, wherein the electrolyte layer with a high liquid electrolyte absorption rate has an electrolyte absorption rate larger than 1.2, the electrolyte layer with a low liquid electrolyte absorption rate has an electrolyte absorption rate less than 1.

3. The gel polymer electrolyte of claim 2, wherein the electrolyte layer with a high liquid electrolyte absorption rate is at least one electrolyte selected from the group consisting of a polyacrylate-based electrolyte, a polyether-based electrolyte, a polycarbonate-based electrolyte, a polycarboxylate-based electrolyte, a silicon-based electrolyte, a polythiol-based electrolyte, poly(maleic anhydride)-based electrolyte, a polysulfate-based electrolyte, or a copolymer between two or more of the above mentioned polymer monomers.

4. The gel polymer electrolyte of claim 3, wherein the polyacrylate-based electrolyte is at least one selected from the group consisting of poly(methyl methacrylate), poly(ethyl methacrylate), polyacrylate, poly(ethyleneglycol) acrylate, poly(trifluoroethyl methacrylate), poly[methyl 2-(trifluoromethyl)acrylate] and poly(methyl trifluoroacrylate); the polyether-based electrolyte is at least one of poly(ethylene oxide) and poly(propylene oxide); the polycarbonate-based electrolyte is at least one selected from the group consisting of poly(trimethylene carbonate), poly(ethylene carbonate), poly(propylene carbonate), poly(vinylene carbonate), poly(dimethyl carbonate), poly(diethyl carbonate) and poly(ethyl methyl polycarbonate); the polycarboxylate-based electrolyte is at least one of poly(vinyl acetate) and polycaprolactone; the silicon-based electrolyte is at least one selected from the group consisting of polysiloxane, polysilsesquioxane and silane-based polysiloxane-based electrolyte; the polysulfate-based electrolyte is at least one selected from the group consisting of poly(1,3,2-dioxathiepane 2,2-dioxide), poly(butylene sulfite), poly(propylene sulfate), poly(dimethyl sulfite), poly(vinyl sulfate), poly(vinyl sulfite); the maleic anhydride-based electrolyte is at least one of poly(methyl methacrylate-co-maleic anhydride) and poly(vinylidene fluoride-maleic anhydride).

5. The gel polymer electrolyte of claim 2, wherein the electrolyte layer with a low liquid electrolyte absorption rate is at least one electrolyte selected from the group consisting of poly(acrylic acid), styrene-butadiene rubber, chitosan, sodium alginate, polyimide, poly(vinylidene fluoride), polyacrylonitrile, poly(vinylidene fluoride-co-hexafluoropropylene), or a polymer produced by polymerization of at least one selected from the group consisting of ethylene phosphate, acrylate-based monomer, silane coupling agent, titanate coupling agent and aluminate coupling agent.

6. The gel polymer electrolyte of claim 5, wherein the acrylate-based monomer is at least one selected from the group consisting of 2-hydroxyethyl methacrylate, 2-hydroxyethyl acrylate, 2-hydroxypropyl methacrylate, 2,2,2-trifluoroethyl methacrylate, and glycidyl methacrylate; the silane coupling agent is at least one selected from the group consisting of [3-(methacryloxy)propyl]trimethoxysilane, [3-(methacryloyloxy)propyl]triisopropoxysilane, [3-(methacryloxy)propyl]methyldimethoxysilane, vinyltriethoxysilane, vinyltrimethoxysilane, and vinyl tris-(2-methoxyethoxy)silane; the titanate coupling agent is at least one selected from the group consisting of di(acetylacetonyl)diisopropyl titanate, isopropyl tri(dioctylphosphate) titanate and isopropyl trioleyl titanate; the aluminate coupling agent is distearoyl isopropoxy aluminate.

7. The gel polymer electrolyte of claim 1, wherein the core layer structure has a diameter of 50nm to 10µm, and the shell layer structure has a thickness of 2-2,000nm.

8. The gel polymer electrolyte of claim 1, wherein the gel polymer electrolyte further comprises a transition layer between the core layer structure and the shell layer structure, the transition layer has a thickness of 10nm to 5 µm.

9. A use of the gel polymer electrolyte with a core-shell structure of claims 1-8 in the lithium metal batteries or lithium-ion batteries.

10. A lithium battery, wherein the lithium battery is a lithium metal battery or a lithium-ion battery, at least one of the cathode, the anode, the liquid electrolyte and the separator of the lithium metal battery or the lithium-ion battery comprises the gel polymer electrolyte with a core-shell structure of claims 1-8.
